# FASCICULE DE BREVET EUROPEEN

(11) **EP 2 303 630 B1**
(45) Date de publication et mention de la délivrance du brevet: **08.06.2016**
(21) Numéro de dépôt: 09784213.2
(22) Date de dépôt: 19.06.2009
(51) Int. Cl.: B60N 2/30, B60R 21/02, B62D 1/26

(54) **PAROI ESCAMOTABLE DE SÉPARATION ET D'ASSISE POUR UN VÉHICULE NOTAMMENT ROUTIER DE TRANSPORT DE PERSONNES**
VERSTAUBARE TRENN- UND SITZWAND FÜR EIN FAHRZEUG INSBESONDERE EIN PERSONENTRANSPORT-STRASSENFAHRZEUG
RETRACTABLE SEPARATION AND SEAT PORTION WALL FOR A VEHICLE, PARTICULARLY A PASSENGER ROAD VEHICLE

(30) Priorité: 01.07.2008 FR 0803736
(43) Date de publication de la demande: 06.04.2011
(73) Titulaire: Lohr Electromecanique, 67980 Hangenbieten (FR)
(72) Inventeur: BINDER Christophe, F-67260 Keskastel (FR); ANDRE, Jean-Luc, F-67120 Molsheim (FR)
(74) Mandataire: Merckling, Norbert
(86) Numéro de dépôt international: PCT/FR2009/000740
(87) Numéro de publication internationale: WO 2010/004111

(56) Documents cités:
- EP-A- 1 354 760
- WO-A1-00/21782
- WO-A1-98/41419
- WO-A1-99/62738
- DE-A1- 4 411 241
- DE-C1- 19 814 548
- DE-U1- 20 020 169
- FR-A- 2 108 519
- FR-A- 2 632 580

## Description

La présente invention concerne une paroi escamotable à sièges intégrés, mobile entre une position effacée et une position de séparation et d'assise pour véhicule routier urbain, comportant un ou plusieurs sièges escamotables.

Plus particulièrement, l'invention se rapporte à une paroi escamotable prévue pour compartimenter un véhicule routier urbain automoteur pouvant être relié à d'autres véhicules routiers identiques par un dispositif d'articulation ou d'accouplement mécanique ou immatériel de manière à constituer facilement et rapidement un train routier articulé de transport en commun.

Par dispositif d'accouplement immatériel on entend tout moyen, par exemple électronique, permettant de constituer un train routier à partir de véhicules routiers urbains automoteurs sans lien mécanique entre ces derniers. De nos jours, il peut par exemple s'agir d'un dispositif de régulation de la distance inter-véhicule assisté par radar associé à un dispositif électronique de commande de la direction.

L'invention a pour but de fournir une paroi escamotable permettant de compartimenter l'habitacle d'un véhicule en deux espaces, à savoir en un poste de conduite et en un compartiment pour passagers, tout en interdisant le passage de l'un à l'autre et en offrant aux voyageurs une série de places assises supplémentaires. Cette paroi escamotable doit préférentiellement comporter une banquette ou un ou plusieurs sièges afin d'augmenter le nombre de places assises dans le compartiment pour passagers, et être mobile entre une position de séparation et une position effacée permettant l'accès au poste de conduite par un conducteur.

Si de nos jours on connaît de nombreux véhicules comportant des sièges ou des parois mobiles et/ou escamotables (cf. notamment les documents DE 200 20 169 U1, WO 98/41 419 A1 et FR 2 632 580 A), il n'existe à l'heure actuelle aucune paroi escamotable pour habitacle de véhicule qui comporte un ou plusieurs sièges et est mobile entre une position effacée et une position de séparation.

Pour satisfaire à ces problèmes techniques, la paroi escamotable de séparation et d'assise de la présente invention, qui est définie par les caractéristiques techniques de la revendication indépendante 1 de produit, comporte un ou plusieurs sièges escamotables ou appuis ischiatiques et est montée mobile sur le véhicule, de préférence au niveau de son toit, par une articulation de manière à être pouvoir se mouvoir entre deux positions finales dans lesquelles elle est immobilisée :
- une position effacée, de préférence contre le toit du véhicule, généralement horizontale, qui permet la libre circulation des passagers et l'accès au poste de conduite, dans laquelle les assises fixées sur la paroi escamotable sont par exemple rabattues contre le plan de la paroi escamotable ; et
- une position de séparation sensiblement verticale dans l'habitacle du véhicule, qui empêche l'accès au poste de conduite et dans laquelle les assises fixées sur la paroi escamotable ou portées par elle peuvent être utilisées par les passagers.

Les sièges à assise rabattable se présentent préférentiellement sous la forme par exemple d'une série de trois strapontins fixés solidement à un cadre articulé au toit.

Ce cadre présente une largeur sensiblement égale à celle de l'espace intérieur de l'habitacle afin de condamner l'accès au poste de conduite en position de séparation. Il supporte aussi une paroi translucide qui offre une visibilité totale vers l'avant en position de séparation et laisse pénétrer une partie de la lumière du lanterneau du toit du véhicule en position effacée.

En utilisation, les strapontins sont disponibles mais peuvent être conservés à assise rabattue contre la paroi afin d'augmenter l'espace intérieur disponible par exemple pour offrir un emplacement à un fauteuil roulant ou pour former un volume de chargement. Par exemple, ces strapontins peuvent aussi être remplacés par des appuis ischiatiques, ils sont alors non rabattables.

Dans le cas de l'utilisation préférée de la paroi escamotable de l'invention pour un véhicule routier automoteur susceptible de constituer un élément urbain constitutif d'un train routier articulé de transport en commun, celle-ci présente de nombreux avantages.

On distingue dans ce cas deux modes d'utilisation de ce véhicule routier automoteur.

Le premier mode d'utilisation, dit mode libre-service, correspond à une utilisation autonome du véhicule à la manière d'un véhicule particulier. L'un des occupants, titulaire du permis de conduire et d'une formation adéquate, remplit la fonction de chauffeur du véhicule. Ce mode correspond à la position effacée pour la paroi escamotable qui dans cette position, se confond dans le design intérieur du véhicule, cachant les strapontins hors de la vue des usagers et les protégeant des éventuelles dégradations. L'accessibilité au poste de conduite est alors aisée et conviviale et le siège du conducteur est libre en débattement pour se régler à la convenance ergonomique du chauffeur. La hauteur sous toit se trouve réduite par l'épaisseur de la paroi amovible rabattue contre le toit, incitant ainsi les passagers à s'asseoir et à s'attacher comme l'impose le code de la route. Le véhicule offre ainsi quatre places assises, dont une pour le chauffeur, et un espace pour un fauteuil roulant ou pour constituer un volume de chargement.

Le second mode d'utilisation, dit mode convoi, correspond à une utilisation collective du véhicule à la manière d'un wagon routier de transport en commun de personnes, tous les occupants ayant la fonction de passagers. Plusieurs véhicules urbains sont alors reliés les uns aux autres pour former un train routier urbain. Seul le véhicule de tête reste en mode libre-service avec accès au poste de conduite, réservé toutefois dans ce mode à un agent d'exploitation spécialisé de transport en commun, faisant partie du personnel de l'exploitant, qui conduit l'ensemble du train routier.

Les manoeuvres de déverrouillage, de rabattement dans quel sens que ce soit, et de verrouillage en position de la paroi escamotable sont de préférence manuelles et elles ne peuvent de préférence, être effectuées que par l'agent d'exploitation.

Dans les autres véhicules urbains, le siège du conducteur est par exemple repoussé au préalable vers l'avant du véhicule avant le rabattement de la paroi escamotable, ou par celle-ci lors de son rabattement, pour être rangé sous le tableau de bord. Le volume disponible dans le compartiment pour passagers est alors maximum. Le poste de conduite est isolé, condamnant ainsi l'accès à celui-ci. La banquette peut être placée en position ouverte contre le siège du chauffeur, ou alors les strapontins peuvent être ouverts individuellement. La paroi escamotable ayant été pivotée vers le bas, la hauteur sous toit est augmentée, par exemple à 1,90 m, permettant aux passagers de se déplacer debout, et même de voyager debout. Les strapontins sont disponibles, le véhicule offre ainsi six par exemple places assises, l'accès au fauteuil roulant restant inchangé. Les strapontins ne disposent pas nécessairement de ceintures de sécurité, puisque non obligatoires dans les véhicules de transport en commun comme les bus.

D'autres caractéristiques et avantages de l'invention apparaîtront à la lecture de la description détaillée qui va suivre, description faite en référence aux dessins annexés, dans lesquels :
- les figures 1 à 6 sont des coupes verticales longitudinales simplifiées représentant le passage de la paroi escamotable selon l'invention de la position effacée à la position de séparation ;
- la figure 7 est une vue en perspective de dessous d'un véhicule en mode libre-service comportant une paroi escamotable selon l'invention ;
- la figure 8 est une vue en perspective de dessus de l'avant d'un véhicule en mode libre-service comportant une paroi escamotable selon l'invention ;
- la figure 9 est une vue en perspective de dessus de l'arrière d'un véhicule en mode convoi comportant une paroi escamotable selon l'invention ;
- la figure 10 est une vue de dessus en coupe horizontale d'un véhicule en mode libre-service comportant une paroi escamotable selon l'invention;
- la figure 11 est une vue de dessus en coupe horizontale d'un véhicule en mode convoi comportant une paroi escamotable selon l'invention avec trois passagers assis sur les strapontins ; et
- la figure 12 est une vue de dessus en coupe horizontale d'un véhicule en mode convoi comportant une paroi escamotable selon l'invention en mode convoi avec les trois strapontins relevés pour laisser la place à un fauteuil roulant.

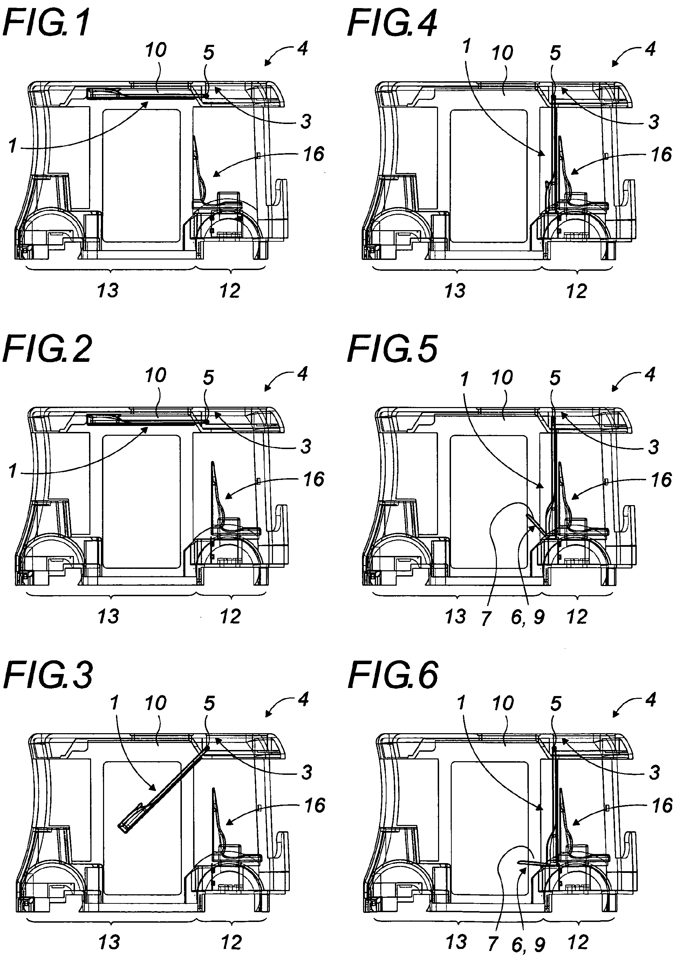

La paroi escamotable mobile selon la présente invention va maintenant être décrite de façon détaillée en référence aux figures 1 à 12. Les éléments équivalents représentés sur les différentes figures porteront les mêmes références numériques.

On définira dans la suite de cette description les notions de haut et de bas, d'inférieur et de supérieur, en fonction de l'orientation adoptée par le véhicule représenté sur les différentes figures. Il est évident que cette orientation ne sera pas forcément conservée en utilisation.

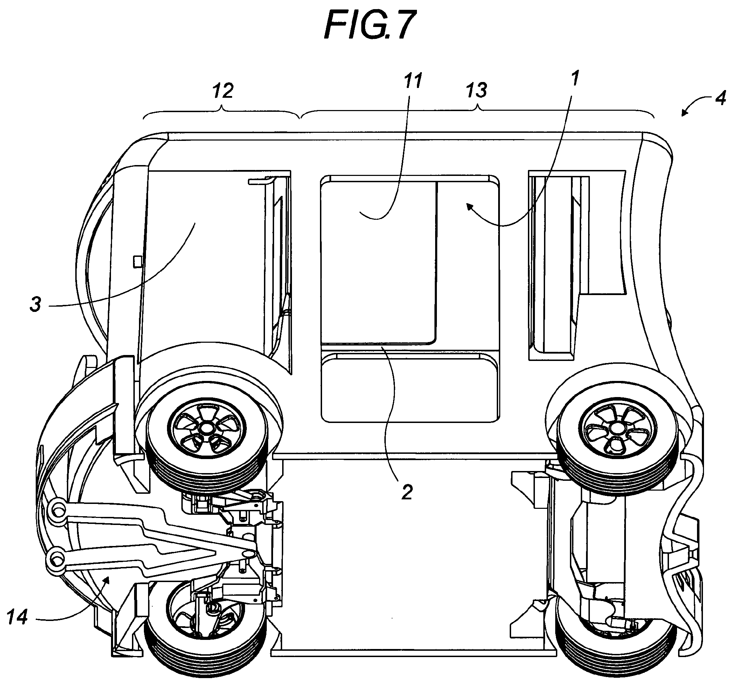

Comme représenté sur les figures 7 à 9, la paroi escamotable 1 selon l'invention est formée d'un cadre 2. Elle est reliée au toit 3 d'un véhicule 4 au moyen d'une articulation de pivotement 5 située de préférence au niveau de la partie supérieure de son cadre 2 lorsque considérée en position de séparation, de manière à être mobile par basculement entre une position effacée et une position de séparation comme représenté sur les figures 1 à 6.

La paroi 1 est immobilisée contre la sous face du toit du véhicule 4 par tout moyen adapté, par exemple par un verrou de sécurité dont seuls les agents d'exploitation possèdent la clé.

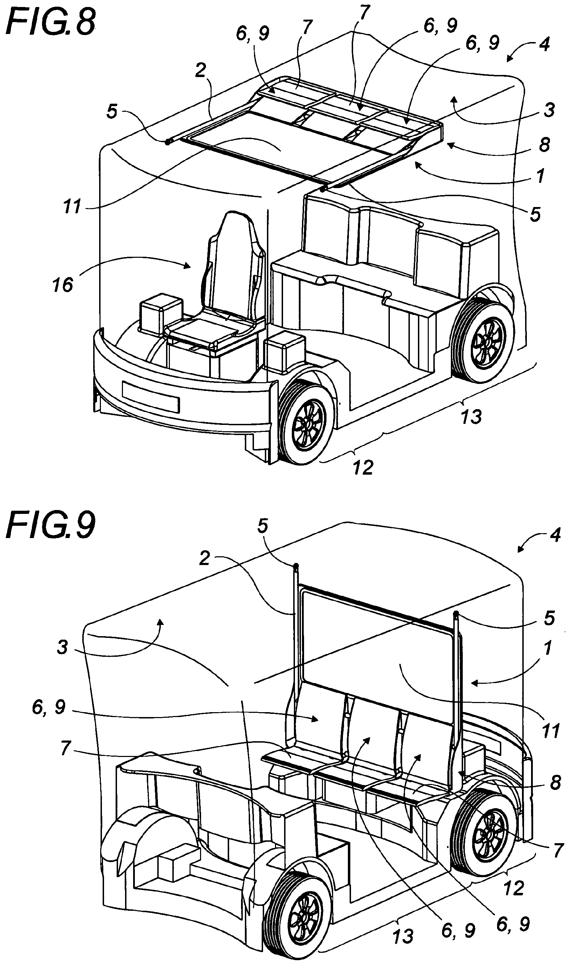

Lorsque considérée en position de séparation, c'est-à-dire pivotée vers le bas (figure 9), la paroi escamotable 1 selon l'invention comporte des sièges 6 dans sa partie inférieure, de préférence escamotables, par exemple à assise 7 rabattable. Ces sièges 6 sont fixés au cadre 2 de la paroi escamotable 1 notamment au dos de la partie non vitrée de celle-ci. Dans un mode de réalisation préféré de l'invention, les sièges 6 sont sous la forme d'une banquette 8 ou d'une série de strapontins 9, par exemple au nombre de trois. Dans ce mode de réalisation préféré, les sièges 6 sont prévus sur la face arrière de la paroi escamotable 1 de sorte que lorsque celle-ci est en position effacée, les sièges 6 se trouvent rabattus contre la paroi escamotable 1 et plaqués contre la sous-face du toit 3 du véhicule 4. Ce rabattement des sièges 6 peut être automatique avec le mouvement d'escamotage de la paroi 1. Ils sont alors préférentiellement invisibles depuis l'habitacle et dissimulés dans un logement 10 adapté prévu dans le toit 3 du véhicule 4.

Lorsque considérée en position de séparation, la paroi 1 selon l'invention présente une surface translucide ou transparente 11 prévue dans sa partie supérieure pour laisser en position de séparation une visibilité à hauteur de passager vers l'avant et permettre à la lumière du lanterneau du toit 3 du véhicule 4 de se diffuser dans l'habitacle du véhicule 4 lorsque la paroi escamotable 1 se trouve en position effacée. Cette surface translucide ou transparente 11 est préférentiellement prévue au-dessus des sièges 6.

La largeur de la paroi escamotable 1 selon l'invention est préférentiellement sensiblement égale à celle du volume intérieur de l'habitacle au niveau de sa position de séparation de sorte que, dans cette position, elle compartimente l'habitacle du véhicule 4 en deux espaces tout en condamnant le passage d'un espace à l'autre. Dans un mode de réalisation préféré de l'invention, la paroi escamotable 1 en position rabattue sépare l'habitacle d'un véhicule 4 en un poste de conduite 12 ainsi rendu non opérationnel et en un compartiment pour passagers 13. Dans cette position, l'exploitant cherche à interdire l'entrée du poste de conduite pour condamner de manière globale l'accès à toutes les commandes de conduite du véhicule. Il n'est ainsi pas nécessaire de prévoir d'autre moyens onéreux, tels qu'un débrayage ou une neutralisation du volant, du pédalier et des autres dispositifs de commande. Le véhicule peut-être utilisé dans ce cas à la manière d'une remorque de transport de personne dont la sécurité est assurée à moindre frais.

Sur les différentes figures, on a représenté un mode d'application préférée pour un véhicule routier urbain automoteur 4 pouvant être relié à d'autres véhicules routiers 4 identiques par un dispositif d'articulation ou d'accouplement 14 mécanique ou immatériel de manière à constituer facilement et rapidement un train routier urbain articulé de transport en commun (non représenté). Ce véhicule routier urbain 4 peut ainsi être utilisé selon un mode libre-service ou un mode convoi comme expliqué précédemment.

L'application de la paroi escamotable 1 selon l'invention ne se limite cependant pas à un tel véhicule 4, mais peut être adaptée à tout autre type de véhicule, par exemple routier, aérien, naval ou ferroviaire, prévu pour le transport de personnes, ou bien même à tout espace prévu pour faire assoir des personnes.

De même, la paroi escamotable 1 selon l'invention ne se limite pas à une fonction de séparation entre un poste de conduite 12 et un compartiment pour passagers 13, mais peut être utilisée pour compartimenter un espace de manière quelconque dont un des volumes est prévu pour accueillir des personnes en leur offrant notamment quelques places assises supplémentaires.

Dans le cadre de l'application préférée de l'invention, la cinématique du passage de la position effacée (figures 7 et 8) à la position de séparation (figure 9) pour la paroi escamotable 1 selon l'invention est représentée de manière schématique sur les figures 1 à 6.

Sur la figure 1, qui représente un mode libre-service pour le véhicule 4 routier urbain automoteur, la paroi escamotable 1 selon l'invention est représentée en position effacée contre le toit 3 du véhicule 4, reçue dans un logement 10 prévu dans le toit 3 du véhicule 4. L'espace occupé par la paroi escamotable 1 réduit d'autant la hauteur sous toit, incitant ainsi les passagers 15 à s'asseoir. Le siège 16 du conducteur 17 est en position d'utilisation afin que le chauffeur 17 puisse conduire le véhicule routier 4.

Le basculement vers le bas de la paroi escamotable 1 autour de son moyen d'articulation de pivotement 5, pour placer celle-ci en position de séparation, est représenté sur les figures 2 à 4. La manoeuvre est de préférence réservée à l'agent d'exploitation qui configure ainsi le véhicule en mode convoi ou en mode libre service. Dans les deux positions, la paroi est verrouillée par un verrou de sécurité ou analogue.

Comme représenté sur les figures, ce basculement est effectué selon un axe transversal au sens de déplacement du véhicule 4. L'homme du métier peut adapter l'orientation de cet axe de basculement selon l'application souhaitée pour la paroi escamotable 1 de l'invention et envisager par exemple un basculement selon un axe parallèle au sens de déplacement du véhicule 4.

On peut aussi envisager que l'axe de pivotement soit déporté vers l'arrière du véhicule 4. Cela nécessiterait une manoeuvre de positionnement de la paroi escamotable 1 en deux phases : d'abord un pivotement, puis un coulissement longitudinal jusqu'à butée de la paroi 1 contre le dos du siège 16 du conducteur 17.

On peut également envisager d'articuler la paroi autour d'une charnière au sol. Dans ce cas, la paroi est rabattue sur le plancher du véhicule et la hauteur se trouve également réduite.

De façon générale, toutes les combinaisons de mouvements simples sont possibles tels que le pivotement et la translation, ainsi que les moyens correspondants d'articulation et de déplacement connus de l'homme du métier.

Sur la figure 2, le siège 16 du conducteur 17 est préalablement poussé et rangé sous le tableau de bord afin que la paroi escamotable 1 puisse être pivotée le plus possible vers l'avant du véhicule routier 4 et que le volume disponible dans le compartiment pour passagers 13 soit maximal. En effet, en mode convoi, le poste de conduite 12 du véhicule routier urbain 4 n'est pas utilisé et l'espace disponible sert uniquement de compartiment pour passagers 13.

Selon une variante, on peut envisager que le siège 16 du conducteur 17 soit poussé par la paroi escamotable 1 lors de la fin du basculement vers le bas de celle-ci. De même, on peut envisager un moyen d'asservissement automatique (non représenté) qui pousse automatiquement le siège 16 du conducteur 17 lorsque la paroi escamotable 1 est basculée vers le bas.

Selon le mode de réalisation préféré de l'invention représenté sur les figures, le basculement de la paroi escamotable 1, ainsi que le déplacement du siège 16 du conducteur 17, se font manuellement par l'agent d'exploitation. On peut néanmoins envisager une motorisation pour effectuer ces actions et une télécommande. Si la manoeuvre est effectuée manuellement, on peut prévoir des moyens d'assistance à la manoeuvre, par exemple mais non limitativement, des vérins pneumatiques pour freiner la descente de la paroi escamotable 1.

De même, le déplacement du siège 16 du conducteur 17 n'est pas obligatoire et ne correspond qu'à un mode d'application particulier de l'invention.

De la même manière, dans le cas où la paroi escamotable 1 de l'invention est utilisée pour une autre application, un autre élément du véhicule 4 dans lequel elle est montée peut être déplacé vers l'avant ou pendant le basculement de la paroi escamotable 1 vers le bas. Cet autre élément du véhicule 4 peut par exemple être une banquette, un rangement pour bagages, une cloison mobile, un poste de conduite, un aménagement intérieur quelconque ou tout autre élément susceptible de pouvoir être déplacé, escamoté ou replié.

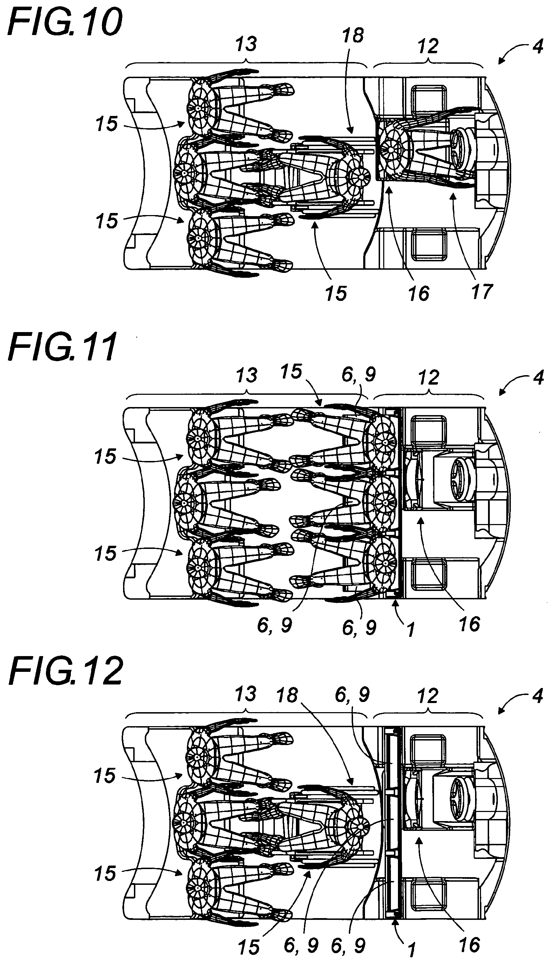

Une fois la paroi escamotable 1 selon l'invention arrivée en position de séparation (figures 4 et 9), l'assise 7 des strapontins 9 peut être rabattue ou non. L'avantage de l'utilisation de strapontins 9, outre le fait qu'ils permettent en se rabattant de plaquer la paroi escamotable 1 contre la sous face du toit 3 du véhicule 4, réside surtout dans le fait qu'ils sont disponibles pour que des voyageurs 15 puissent s'assoir (figures 6 et 11) tout en permettant lorsqu'ils sont relevés d'offrir une place pour un fauteuil roulant 18 (figures 4 et 12), un volume de chargement ou un espace supplémentaire pour des voyageurs 15 debout en cas d'affluence. En effet, en position de séparation, la paroi escamotable 1 de l'invention n'occupe plus sa position contre le toit 3, ce qui augmente la hauteur sous toit, permettant aux passagers 15 de se tenir debout.

Le passage de la position de séparation à la position effacée se fait par l'opération inverse à celle précédemment décrite, notamment en basculant la paroi escamotable 1 du bas vers le haut jusqu'à ce qu'elle soit plaquée contre le toit 3 du véhicule 4.

Par strapontins on entend ici tout moyen permettant de s'assoir et qui est mobile entre une position effacée et une position d'assise. Il peut donc s'agir de tout type de siège pouvant être replié ou escamoté par un quelconque moyen. Il peut également s'agir de simples appuis ischiatiques.

On peut également envisager de remplacer un ou plusieurs strapontins 9 par des sièges fixes classiques ou de les grouper en banquette.

Il est évident que la présente description ne se limite pas aux exemples explicitement décrits, mais comprend également d'autres modes de réalisation et/ou de mise en oeuvre, pourvu que l'on reste dans le cadre de l'invention tel que défini par les revendications.

Ainsi, bien que nous ayons représenté un véhicule 4 comportant une seule paroi escamotable 1 selon l'invention, il est parfaitement envisageable de prévoir plusieurs parois escamotables 1 selon l'invention pour un même véhicule.

## Revendications

1. Véhicule (4) comportant un poste de conduite (12) et une paroi escamotable (1) de séparation et d'assise, **caractérisé en ce que** la paroi escamotable (1) comporte un cadre (2) et au moins un siège (6) ou au moins un appui ischiatique, ladite paroi escamotable (1) étant montée mobile sur le véhicule (4) au moyen d'une articulation de pivotement (5) située au niveau d'une partie d'extrémité de son cadre (2) de manière à pouvoir passer par simple basculement entre deux positions finales dans lesquelles elle est immobilisée, à savoir une position effacée sensiblement horizontale et une position de séparation sensiblement verticale dans l'habitacle du véhicule (4), **en ce que** le véhicule (4) est routier urbain et destiné à être relié à d'autres véhicules routiers identiques par un dispositif d'articulation ou d'accouplement de manière à constituer un train routier articulé de transport en commun de personnes, et **en ce que**, lorsque le véhicule (4) est relié à d'autres véhicules routiers identiques, la paroi escamotable (1) est pivotée en position de séparation qui compartimente l'habitacle du véhicule (4) en deux espaces tout en condamnant le passage d'un espace à l'autre, de sorte que le poste de conduite (12) soit isolé du reste du véhicule (4).

2. Véhicule (4) selon la revendication 1, **caractérisé en ce que** la paroi escamotable (1) est reliée au toit (3) du véhicule (4) au moyen de l'articulation de pivotement (5) lui permettant de passer par basculement autour d'un axe transversal au véhicule, d'une position effacée rabattue contre la sous-face du toit (3) à une position de séparation sensiblement verticale dans l'habitacle du véhicule (4) et inversement.

3. Véhicule (4) selon la revendication 1 ou 2, **caractérisé en ce que** la paroi escamotable (1) est verrouillée dans chacune de ses positions par tout moyen adapté.

4. Véhicule (4) selon la revendication 1, **caractérisé en ce que** les sièges (6) portés par la paroi escamotable (1) sont escamotables tout en restant portés par la face arrière de la paroi escamotable (1) lorsque considérée en position de séparation.

5. Véhicule (4) selon la revendication 1 ou 2, **caractérisé en ce que** lorsque la paroi escamotable (1) est en position effacée, celle-ci est reçue dans un logement prévu dans le toit (3) du véhicule (4).

6. Véhicule (4) selon la revendication 1, **caractérisé en ce que** les sièges (6) portés par la paroi escamotable (1) sont des strapontins (9).

7. Véhicule (4) selon la revendication 1, **caractérisé en ce que** les sièges (6) portés par la paroi escamotable (1) sont regroupés en banquette.

8. Véhicule (4) selon la revendication 1, **caractérisé en ce que** les sièges (6) portés par la paroi escamotable (1) sont situés au niveau de la partie inférieure de la paroi escamotable (1) lorsque considérée en position de séparation.

9. Véhicule (4) selon la revendication précédente, **caractérisé en ce que** l'articulation est montée sur la partie supérieure du cadre (2) de la paroi escamotable (1) lorsque considérée en position de séparation.

10. Véhicule (4) selon la revendication 1, **caractérisé en ce que** la paroi escamotable (1) comporte une surface translucide ou transparente (11).

11. Véhicule (4) selon la revendication précédente, **caractérisé en ce que** la surface translucide ou transparente (11) est située dans la partie supérieure de la paroi escamotable (1) au-dessus des sièges (6) lorsque considérée en position de séparation.

12. Véhicule (4) selon la revendication 1, **caractérisé en ce que** la paroi escamotable (1) présente une largeur sensiblement égale à celle du volume intérieur de l'habitacle au niveau de sa position de séparation.

## Patentansprüche

1. Fahrzeug (4) mit einem Führerstand (12) und einer verschwenkbaren Wand (1) zur Abtrennung und mit Sitzflächen, **dadurch gekennzeichnet, dass** die verschwenkbare Wand (1) einen Rahmen (2) und mindestens einen Sitz (6) umfasst oder mindestens eine Gesäßstütze, wobei diese verschwenkbaren Wand (1) mobil im Fahrzeug (4) über ein Schwenkgelenk (5), das sich in Höhe eines Endstück des Rahmens (2) befindet, befestigt ist, sodass durch einfaches Kippen zwischen zwei Endpositionen gewechselt werden kann, in denen sie festgestellt werden kann, und zwar in einer hochgeschwenkten Position, die deutlich horizontal ist und einer deutlich vertikalen Trennposition im Führerstand des Fahrzeugs (4); dadurch, dass es sich um ein Fahrzeug (4) für den Stadtverkehr handelt und es dazu vorgesehen ist, mit anderen, gleichartigen Straßenfahrzeugen über eine Gelenk- oder Kupplungsvorrichtung verbunden zu werden, sodass sich ein Lastzug, für den öffentlichen Personentransport ergibt und dadurch, dass wenn das Fahrzeug (4) mit anderen, gleichartigen Straßenfahrzeugen verbunden ist, die verschwenkbare Wand (1) in die Trennposition gekippt wird, die den Innenraum des Fahrzeugs (4) in zwei Räume teilt und dabei den Durchgang von einem zum anderen versperrt, sodass der Führerstand (12) vom Rest des Fahrzeugs (4) abgetrennt ist.

2. Fahrzeug (4) gemäß Anspruch 1, **dadurch gekennzeichnet, dass** die verschwenkbare Wand (1) mit dem Dach (3) des Fahrzeugs (4) über das Schwenkgelenk (5) verbunden ist, das es ermöglicht, durch Kippen um eine Querachse des Fahrzeugs gedreht zu werden, aus einer zusammengelegten, gegen die Unterseite des Daches (3) geklappten Position in eine Trennposition gebracht zu werden, die deutlich vertikal im Innenraum des Fahrzeugs (4) verläuft und umgekehrt.

3. Fahrzeug (4) gemäß Anspruch 1 oder 2, **dadurch gekennzeichnet, dass** die verschwenkbare Wand (1) in jeder ihrer Positionen durch alle geeigneten Mittel verriegelt werden kann.

4. Fahrzeug (4) gemäß Anspruch 1, **dadurch gekennzeichnet, dass** die Sitze (6), die an der verschwenkbaren Wand (1) befestigt sind, ausziehbar sind, und gleichzeitig von der Rückseite der verschwenkbaren Wand (1) getragen werden, wenn diese sich in der Trennposition befindet.

5. Fahrzeug (4) gemäß Anspruch 1 oder 2, **dadurch gekennzeichnet, dass**, wenn sich die verschwenkbare Wand (1) in der hochgeschwenkten Position befindet, diese in einem Lagerraum im Dach (3) des Fahrzeugs (4) untergebracht ist.

6. Fahrzeug (4) gemäß Anspruch 1, **dadurch gekennzeichnet, dass** die von der verschwenkbaren Wand (1) gehaltenen Sitze (6) Klappsitze (9) sind.

7. Fahrzeug (4) gemäß Anspruch 1, **dadurch gekennzeichnet, dass** die von der verschwenkbaren Wand (1) gehaltenen Sitze (6) als Bank angeordnet sind.

8. Fahrzeug (4) gemäß Anspruch 1, **dadurch gekennzeichnet, dass** die von der verschwenkbaren Wand (1) gehaltenen Sitze (6) sich in Höhe des unteren Teils der verschwenkbaren Wand (1) befinden, wenn die Trennposition betrachtet wird.

9. Fahrzeug (4) gemäß dem vorhergehenden Anspruch, **dadurch gekennzeichnet, dass** das Gelenkt auf dem oberen Teil des Rahmens (2) der verschwenkbaren Wand (1) montiert ist, wenn die Trennposition betrachtet wird.

10. Fahrzeug (4) gemäß Anspruch 1 **dadurch gekennzeichnet, dass** die verschwenkbare Wand (1) eine durchscheinende oder transparente (11) Fläche umfasst.

11. Fahrzeug (4) gemäß dem vorhergehenden Anspruch, **dadurch gekennzeichnet, dass** die durchscheinende oder transparente (11) Fläche sich im oberen Teil der verschwenkbaren Wand (1) über den Sitzen (6) befindet, wenn die Trennposition betrachtet wird.

12. Fahrzeug (4) gemäß Anspruch 1, **dadurch gekennzeichnet, dass** die verschwenkbare Wand (1) eine Breite aufweist, die deutlich gleich dem Innenvolumen des Fahrgastraums in Höhe der Trennposition ist.

## Claims

1. Vehicle (4) incorporating a driver's cabin (12) and a retractable partition (1) for separation and seating, **characterized in that** the retractable partition (1) incorporates a frame (2) and at least one seat (6) or at least one ischiatic support; the said retractable partition (1) is mounted so as to be mobile on the vehicle (4) by means of a pivoting articulation (5) located at an end part of its frame (2), such that it simply tips between two final positions in which it is immobilized, namely one retracted position in which it is essentially horizontal and one separation position in which it is essentially vertical in the vehicle's (4) interior compartment; and **in that** the vehicle (4) is an urban road vehicle intended to be joined to other identical road vehicles by means of an articulation or coupling system so as to constitute an articulated road train for public transport of persons, and **in that**, when the vehicle (4) is connected to other identical road vehicles; the retractable partition (1) is pivoted in the separation position that compartments the interior compartment of the vehicle (4) into two spaces and prevents passage from one space to the other, such that the driver's cabin (12) is isolated from the rest of the vehicle (4).

2. Vehicle (4) according to claim 1, **characterized in that** the retractable partition (1) is connected to the roof (3) of the vehicle (4) by means of the pivoting articulation (5) allowing it to pivot around an axis transversal to the vehicle, from a retracted position in which it is folded back to the underside of the roof (3) to a separation position in which it is essentially vertical in the interior compartment of the vehicle (4), and vice versa.

3. Vehicle (4) according to claim 1 or claim 2, **characterized in that** the retractable partition (1) is locked in each of its positions by any suitable means.

4. Vehicle (4) according to claim 1, **characterized in that** the seats (6) borne by the retractable partition (1) are retractable while remaining borne by the rear face of the retractable partition (1) when considered in the separation position.

5. Vehicle (4) according to claim 1 or claim 2, **characterized in that** when the retractable partition (1) is in the retracted position, it is accommodated in a housing provided in the roof (3) of the vehicle (4).

6. Vehicle (4) according to claim 1, **characterized in that** the seats (6) borne by the retractable partition (1) are tip-down seats (9).

7. Vehicle (4) according to claim 1, **characterized in that** the seats (6) borne by the retractable partition (1) are grouped into bench seating units.

8. Vehicle (4) according to claim 1, **characterized in that** the seats (6) borne by the retractable partition (1) are located at the lower part of the retractable partition (1) when considered in the separation position.

9. Vehicle (4) according to the preceding claim, **characterized in that** the articulation is mounted on the top part of the frame (2) of the retractable partition (1) when considered in the separation position.

10. Vehicle (4) according to claim 1, **characterized in that** the retractable partition (1) incorporates a translucent or transparent surface (11).

11. Vehicle (4) according to the preceding claim, **characterized in that** the translucent or transparent surface (11) is located in the top part of the retractable partition (1) above the seats (6) when considered in the separation position.

12. Vehicle (4) according to claim 1, **characterized in that** the retractable partition (1) has a width essentially equal to that of the inner volume of the interior compartment at its separation position.
